# EUROPEAN PATENT SPECIFICATION

(11) **EP 3 521 693 B1**
(45) Date of publication and mention of the grant of the patent: **24.02.2021**
(21) Application number: 18858224.1
(22) Date of filing: 09.01.2018
(51) Int. Cl.: F21V 3/02, F21S 8/00

(54) **LIGHT-DIFFUSING LAMP SHADE AND PANEL LAMP HAVING SAME**
LICHTSTREUENDER LAMPENSCHIRM UND PANELLAMPE DAMIT
ABAT-JOUR DE DIFFUSION DE LUMIÈRE ET LAMPE À PANNEAU LE COMPORTANT

(30) Priority: 19.09.2017 CN 201721211893 U; 24.11.2017 CN 201711194379
(43) Date of publication of application: 07.08.2019
(73) Proprietor: Vital Lighting Co., Ltd, Foshan, Guangdong 528137 (CN)
(72) Inventor: LI, Lihua, Foshan Guangdong 528137 (CN); WANG, Baofeng, Foshan Guangdong 528137 (CN)
(74) Representative: Sun, Yiming
(86) International application number: PCT/CN2018/071833
(87) International publication number: WO 2019/056660

(56) References cited:
- WO-A1-2013/058014
- CN-A- 102 072 441
- CN-A- 104 132 308
- CN-A- 105 473 931
- CN-U- 203 298 121
- CN-U- 203 298 127
- CN-U- 203 375 298
- CN-U- 204 611 450
- JP-A- 2014 116 206
- JP-A- 2014 130 743
- JP-A- 2016 081 782
- JP-A- 2016 219 119

## Description

### Technical Field

The present invention relates to a lamp, and in particular to a light diffuser cover and a panel light having the light diffuser cover.

### Background Art

At present, LED lights have been widely used and gradually replaced the incandescent lamps having high energy consumption. Panel light is a specific form of the application of LED lights and is commonly used in indoor lighting, such as home lighting and commercial lighting. It has an elegant appearance, is simple and practical in control, energy-saving and environmentally friendly, and has dust-proof and anti-static properties, strong light transmittance, light stability and other advantages. The panel light is usually provided with a light strip, a light guide plate, a light diffuser plate and other structures installed inside a frame or a light body, and light from the light strip is sent out through the light guide plate and the light diffuser plate to achieve the lighting effect.

JP 2014 116206 A discloses an illumination device including a light source part including a light emission region in which a semiconductor light emitting element is the light source; and a cover for covering a region including the light emission region of the light source part. The cover has a center cover part facing at least a center part of the light emission region of the light source part; and a peripheral cover part positioned around the center cover part and having a region not facing the light emission region. The cover makes the light from the light source part emit from the region not facing the light emission region by having a light diffusion property in the peripheral cover part higher than that in the center cover part.

JP 2014 130743 A discloses a suspension type illumination device including: a light emitting part in which a semiconductor light-emitting element is a light source, and which is arranged with its light emitting direction down; a case which covers an upper side of the light emitting part; and a translucent cover which covers the lower side of the light emitting part, which is connected to the case and which accommodates the light emitting part between the case and itself. In the illumination device, when a first virtual straight line which is a vertical straight line passing through an outer peripheral edge, which is a portion of the outermost side of the case at a boundary part between the case and the cover, is assumed, in a vertical cross section, an outer peripheral edge, which is the portion of the outermost side of the cover at the boundary part, is located on the first virtual straight line or located at inner side than the first virtual straight line.

JP 2016 219119 A discloses an LED illuminating device comprising a first light source board that comprises a plurality of LED elements as main light sources and applies light; a second light source board that comprises a plurality of LED elements as auxiliary light sources and applies light; and a heat dissipation plate that dissipates heat of the first light source board and the second light source board. The first light source board is arranged on the side of a lower surface of the heat dissipation plate so as to apply light downward. The second light source board is arranged on the side of an upper surface of the heat dissipation plate so as to apply light upward.

WO 2013/058014 A1 discloses a flat lamp device comprising a flat substrate, a light source positioned on the substrate and having light distribution that has strong directivity in the direction of the normal, and a translucent cover for covering the light source. The translucent cover has a light collection part positioned so as to cover at least a section of the upper surface of the light source, and a light-guide projection part for curving and guiding collected light toward the outside from the light source, and projecting the light from the side surface or rear surface of the substrate.

However, existing panel lights have the following defects: there exists a frame or a light body shading component along the circumference of the light, resulting in no light transmission, such that the outline of the light has dim regions with no light transmission.

### Summary of the Invention

In order to overcome the deficiencies in the prior art, the present invention is aimed at providing a panel light having a light diffuser cover. The panel light having the light cover of the present invention effectively reduces the dim spots along the circumference of the panel light and enhance the coverage area of light, thereby maximizing the light efficiency.

The aim of the present invention is achieved by the following technical solution:
a panel light comprising the light cover, further comprising a light body and a light-emitting assembly, the light-emitting assembly comprises a light guide plate, a reflective film, a light strip and a lamp connector; the light cover and the light body enclose and form a receiving cavity, the lamp connector is arranged in the receiving cavity, and the light strip is connected to the lamp connector; the reflective film abuts against the inner bottom surface of the light body, the light guide plate has a connecting side surface abutting against the reflective film and a light-emitting surface facing away from the connecting side surface; a circumferential side surface of the light guide plate is provided with the light strip;
the cover comprises a bottom wall and a flange surrounding the bottom wall, wherein the light cover further comprises an optical bulge arranged on the bottom wall, the optical bulge being arranged on a side surface of the bottom wall facing a light source, and the optical bulge abutting against a light-emitting assembly of the panel light, and the light cover further has a cavity for receiving the light reflected by the optical bulge, the cavity being arranged between the optical bulge and the flange and wherein the optical bulge, the flange, the bottom wall and the lamp connector enclose and form the cavity.

Further, the optical bulge comprises a first boss abutting against the light-emitting assembly, and a first recess located beside the first boss and away from the middle of the bottom wall, with the thickness of the light cover at the lowest point of the first recess being less than the thickness of the light cover in the middle of the bottom wall. Further, the optical bulge further comprises a second boss, the first recess being arranged between the first boss and the second boss, and the thickness of the light cover at the second boss being less than the thickness of the light cover at the first boss.

Further, the thickness of the light cover at the lowest point of the first recess is less than the thickness of the light cover in the middle of the bottom wall.

Further, a second recess is provided on one side, facing the flange, of the second boss, with the thickness of the light cover at the lowest point of the second recess being greater than the thickness of the light cover at the lowest point of the first recess.

Further, the optical bulge comprises a first curved portion connected with the bottom wall, a third curved portion forming the first boss of the optical bulge, a second curved portion connecting the first curved portion with the third curved portion, a fourth curved portion connected with the third curved portion and forming the first recess, a fifth curved portion connected with the fourth curved portion and forming the second boss, and a sixth curved portion connected with the fifth curved portion and forming the second recess, the sixth curved portion being connected with an inner wall surface of the flange.

Further, the curvature of the second curved portion is less than that of the first curved portion, the curvature of the third curved portion is greater than that of the second curved portion, the curvature of the fourth curved portion is greater than that of the third curved portion, the curvature of the fifth curved portion is less than that of the fourth curved portion, and the curvature of the sixth curved portion is greater than that of the fifth curved portion.

Further, the top of the first boss is planar.

Further, the optical bulge comprises a first curved portion connected with the bottom wall, a second curved portion connected with the first curved portion and forming a wall surface of the first boss, a third curved portion connected with the second curved portion and forming a corner of the first boss, a fourth curved portion connected with the third curved portion and forming the top of the first boss, a fifth curved portion connected with the fourth curved portion and forming the first recess, and a sixth curved portion connected with the fifth curved portion and the flange.

Compared to the prior art, the beneficial effects of the present invention lie in that
the side surface of the bottom wall facing the light source is provided with an optical bulge, the optical bulge being arranged on a side surface of the bottom wall facing a light source, and the optical bulge being used for abutting against a light-emitting assembly of a lamp, and the light cover further has a cavity for receiving the light reflected by the optical bulge, the cavity being arranged between the optical bulge and the flange; when the light from the lamp meets the bulge, refraction or reflection different from the planar portion occurs, causing full diffusion of light, that is, forming the light diffuser cover, and thus a side portion of the light cover can also send out uniform light; and the dim spots along the circumference of the lamp are effectively reduced, enhancing the coverage area of light, thereby maximizing the light efficiency.

### Brief Description of the Drawings

Fig. 1 is an overall schematic diagram of a panel light of the present invention;
Fig. 2 is a schematic diagram of a cross section A-A of the panel light shown in Fig. 1;
Fig. 3 is a schematic diagram of a first embodiment of the panel light shown in Fig. 1;
Fig. 4 is a schematic diagram of an optical path of the panel light shown in Fig. 3;
Fig. 5 is an enlarged schematic diagram of a portion B of the panel light shown in Fig. 3;
Fig. 6 is a schematic diagram of the reflection of light by the curved portions of the panel light shown in Fig. 3;
Fig. 7 is a schematic diagram of the refraction of light by the curved portions of the panel light shown in Fig. 3;
Fig. 8 is a schematic diagram of a second embodiment of the panel light shown in Fig. 1;
Fig. 9 is a schematic diagram of the reflection of light by the curved portions of the panel light shown in Fig. 8; and
Fig. 10 is a schematic diagram of the refraction of light by the curved portions of the panel light shown in Fig. 8.

In the drawings: 100. Light cover; 110. bottom wall; 111. First linear portion; 120. optical bulge; 121. First boss; 122. Second boss; 123. First recess; 124. Second recess; 125. First curved portion; 126. Second curved portion; 127. Third curved portion; 128. Fourth curved portion; 129. Fifth curved portion; 1201. Sixth curved portion; 130. Flange; 131. Second linear portion; 140. Cavity; 150. Connecting protrusion; 200. Light body; 210. Connecting boss; 300. Light-emitting assembly; 310. Light guide plate; 311. Light-emitting surface; 320. Reflective film; 330. Light strip; 331. Light bead; 332. Gap; 340. Lamp connector; 341. First connecting portion; 342. Second connecting portion; 343. Nut; 400. Sealing component; 500. Sealing body; 510. Sealing groove; 2120. Second optical bulge; 2121. First boss; 2122. First recess; 2123. First curved portion; 2124. Second curved portion; 2125. Third curved portion; 2126. Fourth curved portion; 2127. Fifth curved portion; 2128. Sixth curved portion.

### Detailed description of the Embodiments

Hereinafter, further description of the present invention is provided in combination with the accompany drawings and the particular embodiments. It should be noted that various embodiments or various technical features described below can be arbitrarily combined to form new embodiments without conflict.

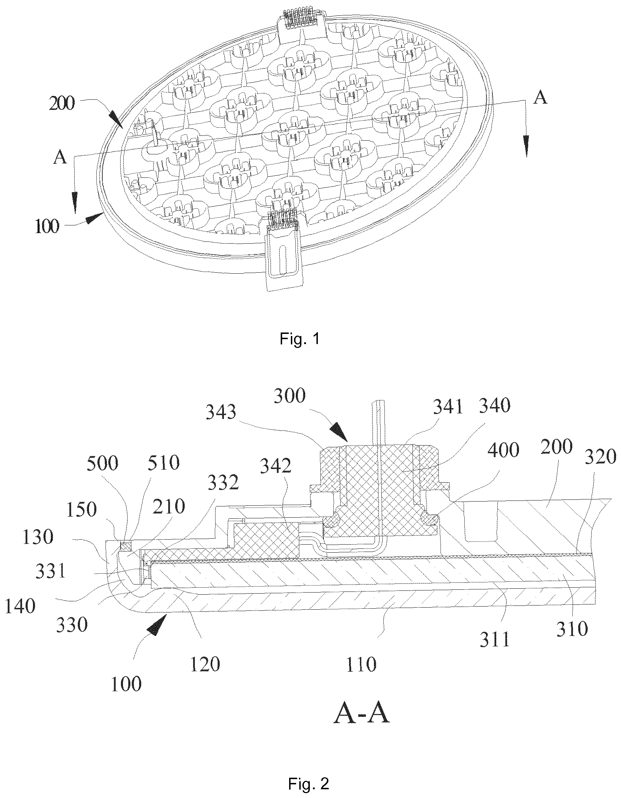

Referring to Figs. 1 and 2, the panel light is composed of a light cover 100, a light body 200, a light-emitting assembly 300, a sealing component 400, a sealing body 500, etc. The light-emitting assembly 300 comprises a light guide plate 310, a reflective film 320, a light strip 330 and a lamp connector 340. The inner side surface of the light body 200 is installed with the light strip 330, the inner bottom surface of the light body 200 is provided with a groove, the lamp connector 340 is arranged in the groove and electrically connected with the light strip 330, and the reflective film 320 is tightly attached to the inner bottom surface of the light body 200. In a preferred solution, the reflective film 320 abuts against a side surface of the lamp connector 340, the light guide plate 310 has a connecting side surface abutting against the reflective film 320, the light guide plate 310 faces away from the light-emitting surface 311 of the connecting side surface, the circumferential side surface of the light guide plate 310 is provided with the light strip 330, the side surface of the light strip 330 facing the light guide plate 310 is provided with a light source, and the light source is preferably composed of a plurality of LED light beads 331. A gap 332 ranging from 0.05 mm to 0.6 mm is provided between the circumferential side surface of the light guide plate 310 and the side surface of the light strip 330. The side surface of the bottom wall 110 facing the light body 200 is provided with an optical bulge 120. The optical bulge 120 abuts against the light-emitting surface 311 of the light guide plate 310. The light cover 100 has a flange 130 extending in the direction of connection with the light body 200. The optical bulge 120 is arranged at the connection between the bottom wall 110 and the flange 130. The side surfaces of the optical bulge 120, the flange 130, the bottom wall 110 and the lamp connector 340 away from the light source enclose and form the cavity 140. The light body 200 is clamped on the inner side surface of the flange 130, and the light cover 100 and the light body 200 enclose and form a receiving cavity. The material of light body 200 includes plastic and metal. The light cover 100 is made of a light-transmitting opaque material including PC, PMMA, SAN. In a preferred embodiment, the light cover 100 may be designed to be circular, square, oval or irregular in shape.

In a preferred technical solution, the inner side surface of the flange 130 is further provided with a connecting protrusion 150 facing the inside of the light cover 100, the connecting protrusion 150 is used to form a clamping connection with a connecting boss 210 on the circumferential side surface of the light body 200, the connecting protrusion 150 and the connecting boss 210 enclose and form the sealing groove 510, the sealing groove 510 can be filled with the sealing body 500, and after the sealing body 500 is cured, the light body 200 and the light cover 100 can be adhered at the sealing groove 510 so as to achieve the dust-proof and waterproof effect. The sealing body 500 is preferably made of a sealing material resistant to a temperature no less than 100°C. The sealing materials include silicones, epoxy resin, UV glue and rubber. In a preferred technical solution, the sealing groove 510 is sized to be 1-2.5 mm in width and 1-2 mm in depth.

In a preferred embodiment, the lamp connector 340 comprises a first connecting portion 341 for fixing the light body 200 to an external mounting structure, a second connecting portion 342 located in the receiving cavity and used for connecting the light guide plate 310, an elastic piece, an electric wire, a sealing component 400 and a nut 343. The reflective film 320 abuts against the second connecting portion 342, the first connecting portion 341 of the lamp connector 340 penetrates through the light body 200, the first connecting portion 341 is provided with a clamping boss, and the clamping boss abuts against the wall surface of the light body 200 facing the receiving cavity. A sealing component 400 is arranged at the connection between the first connecting portion 341 of the lamp connector 340 and the light body 200, and the first connecting portion 341 of the lamp connector 340 is provided with an annular groove for receiving the sealing component 400. The electric wire is disposed in the middle of the first connecting portion 341 of the lamp connector 340, and penetrates through the first connecting portion 341 and extends into the receiving cavity to connect the light strip 330. The second connecting portion 342 abuts against the light body 200 and is disposed separately from the first connecting portion 341, and the second connecting portion 342 is provided with a passage for receiving the electric wire. The portion of the first connecting portion 341 located outside the light body 200 is provided with a thread, and the nut 343 is screwed onto the thread to drive the first connecting portion 341 to tightly fit with the light body 200 through the sealing component 400 so as to achieve the dust-proof and waterproof effect. The first connecting portion 341 and the second connecting portion 342 are preferably made of moulded plastic. The light body 200 is made of metal or plastic, and the light cover 100 is preferably made of a light-transmitting opaque material. The material of the light cover 100 is preferably polymethylmethacrylate, polycarbonate or styrene acrylonitrile. During assembly, the light cover 100 slightly deforms due to the material strength, thickness and assembly size, for example, the outer side surface of the light cover 100 is expanded by 0.2-2 mm due to compression by the outer side surface of the light body 200 made of metal or plastic, and a plane of the middle of the bottom of the inner surface of the light cover 100 is tightly attached to the light guide plate 310; these does not affect the light-emitting effect and the performance in use of the light. In a preferred embodiment, the light cover 100 is disc-shaped with a maximum outer diameter of 60-400 mm and a height dimension of 8-20 mm. The thickness of the bottom wall of the light cover 100 is 1.6-3.0 mm, and the thickness of the flange 130 is 1.1-2.5 mm. In a preferred embodiment, the light guide plate 310 is processed by laser dotting, surface texturing and embossing for facilitating the uniform light diffusion. In a preferred embodiment, the light-emitting surface 311 of the light guide plate 310 is 0.1 mm to 0.8 mm higher than the bottom surface of the light strip, so that the light from some of the light beads 331 can be directly emitted to the optical bulge 120, and the light is reflected to the cavity 140, so as to increase the optical energy density in the cavity 140.

The light emitted from the LED light beads 331 on the inner side surface of the light body 200 of the panel light of the present invention is transmitted by the light guide plate 310, reflected by the reflective film 320, and emitted from the light-emitting surface 311 and the circumferential side surface of the light guide plate 310. In the light cover 100, except the front face (under the light cover 100 in the figure) where the light emitted from the light guide plate 310 can be emitted uniformly, the inner surface of the light cover 100 is designed with an optical bulge 120 in the corner, the function of the optical bulge is for refracting and reflecting the light emitted from the LED light beads 331 and part of the light emitted from the light guide plate 310, and the cavity 140 also helps to direct the light to the inner side surface of the light cover 100, so that the flange 130 of the light cover 100 can also give out uniform light. The implementation of the optical bulge 120 include the following embodiments.

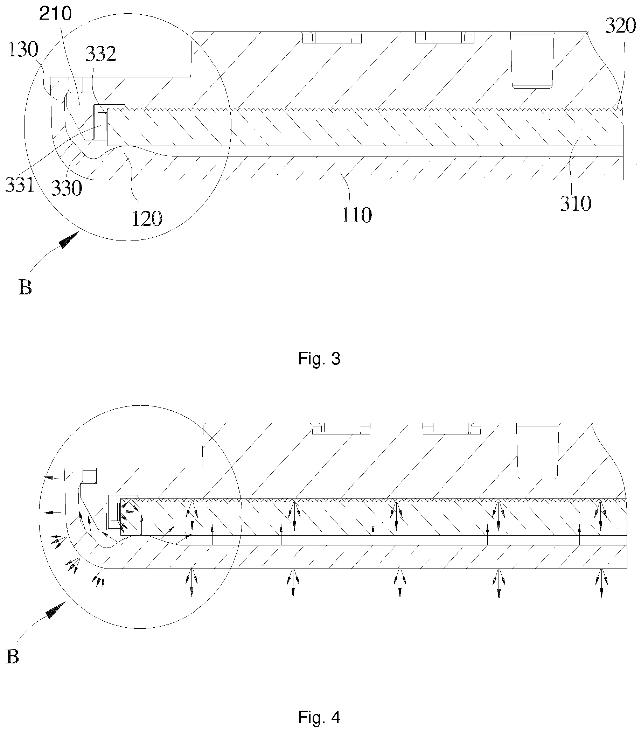

In a first embodiment (see Figs. 3-5), the optical bulge 120 comprises a first boss 121 abutting against the light-emitting assembly 300, and a first recess 123 arranged beside the first boss 121 and located on one side of the first boss 121 away from the middle of the bottom wall 110, with the thickness of the light cover 100 at the lowest point of the first recess 123 being less than the thickness of the light cover 100 in the middle of the bottom wall 110. With the first boss, it is possible to change the optical path of the light originally emitted perpendicularly to the bottom wall, reflecting the light into the cavity 140, so as to contribute to the brightness in the cavity 140. Moreover, using the first recess, the wall surface of the first recess also has the characteristic of reflecting light into the cavity 140 so as to further improve the brightness in the cavity 140.

In order to further concentrate the light energy into the cavity, the optical bulge 120 further comprises a second boss 122, the first recess being arranged between the first boss 121 and the second boss 122, and the thickness of the light cover 100 at the second boss 122 being less than the thickness of the light cover 100 at the first boss 121. The thickness of the light cover at the lowest point of first recess 123 is less than the thickness of the light cover 100 in the middle of the bottom wall 110. A second recess 124 is provided on one side, facing the flange 130, of the second boss 122, with the thickness of the light cover 100 at a lowest point of the second recess 124 being greater than the thickness of the light cover 100 at the lowest point of the first recess 123. The second boss likewise contributes to the unevenness of the inner surface of the light cover, which changes the optical path of the light originally emitted perpendicularly from the bottom wall and concentrates the light into the cavity 140.

The cross section of the optical bulge 120 is formed by the sweeping of six smooth transition curves, and the bottom wall 110 has a first linear portion 111 extending horizontally. The optical bulge 120 comprises a first curved portion 125 connected with the bottom wall 110, a third curved portion 127 forming the first boss 121 of the optical bulge 120, a second curved portion 126 connecting the first curved portion 125 with the third curved portion 127, a fourth curved portion 128 connected with the third curved portion 127 and forming the first recess 123, a fifth curved portion 129 connected with the fourth curved portion 128 and forming the second boss 122, and a sixth curved portion 1201 connected with the fifth curved portion 129 and forming the second recess 124, the sixth curved portion 1201 being connected with an inner wall surface of the flange 130.

The first curved portion 125 is smoothly connected with the first linear portion 111, and a comparison between the curvature of each of the six curved portions and the adjacent curved portion is as follows: the curvature of the second curved portion 126 decreases, the curvature of the third curved portion 127 increases, the curvature of the fourth curved portion 128 continuously increases, the curvature of the fifth curved portion 129 decreases, and the curvature of the sixth curved portion 1201 increases.

The centres of the curvature of the first curved portion 125, the second curved portion 126, the fourth curved portion 128, the fifth curved portion 129, and the sixth curved portion 1201 are all located on the inner side of the light cover 100, while the centre of curvature of the third curved portion 127 is located on the outer side of the light cover 100.

In a further optimized technical solution, the six curved portions have the following dimensional relationships therebetween: the curvature of the first curved portion 125 is K1; the curvature of the second curved portion 126 is K2, and K2 = (0.2 to 0.4) K1; the curvature of the third curved portion 127 is K3, and K3 = (3 to 5) K2; the curvature of the fourth curved portion 128 is K4, and K4 = (2 to 4) K3; the curvature of the fifth curved portion 129 is K5, and K5 = (0.007 to 0.1) K4; and the curvature of the sixth curved portion 1201 is K6, and K6 = (5 to 7) K5.

In a specific embodiment, the curvatures of the above-mentioned curved portions are preferably as follows: K1 = 0.2; K2 = 0.06; K3 = 0.25; K4 = 0.83; K5 = 0.007; and K6 = 0.4. The unit thereof is mm⁻¹.

If the thickness of the middle region of the bottom wall 110 is set to be 1 (that is, the original thickness is 1), the changes in the wall thickness of the curved portions are as follows: the smooth connection between the first curved portion 125 and the first linear portion 111 gradually increases from the right to 103% to 107% of the original thickness, the smooth connection between the second curved portion 126 and the third curved portion 127 continues to increase in a leftwards direction to 125% to 135% of the original thickness, the smooth connection between the third curved portion 127 and the fourth curved portion 128 continues to increase to the thickest point of 135% to 145% of the original thickness and then decreases to the original thickness in a leftwards direction, the smooth connection between the fourth curved portion 128 and the third curved portion 127 continues to decrease to 85% to 95% of the original thickness, the smooth connection between the fifth curved portion 129 and the fourth curved portion 128 increases the thickness of the side wall to 95% to 105% of the original thickness and then decreases same to 85% to 95% of the original thickness in a leftwards and upwards direction, the smooth connection between the sixth curved portion 1201 and the fifth curved portion 129 decreases the thickness of the side wall to 65% to 75% of the original thickness and then increases same to 85% to 95% of the original thickness in an upwards direction, the smooth connection between the second linear portion 131 and the sixth curved portion 1201 extends upward, and the thickness of the second linear portion 131 is 85% to 95% of the original thickness. The first boss, the second boss, the first recess, and the second recess are configured by the curved portions according to the strict design of dimension, thus ensuring that more light is reflected into the cavity 140. Although part of the light is reflected in the direction away from the cavity 140 at the second boss, at the first recess and at the second recess, the first boss has a great thickness so as to ensure the blocking of returned light, and the first recess and the second recess are manufactured with a large curvature so that it is ensured that light is reflected at a large angle and reflected back into the cavity 140 at the first boss and the second boss, while the second boss is manufactured with a small curvature so as to ensure less diffusion of light away from the cavity.

In a preferred embodiment, the smooth connection between the first curved portion 125 and the first linear portion 111 gradually increases from the right to 105% of the original thickness, the smooth connection between the second curved portion 126 and the third curved portion 127 continues to increase in a leftwards direction to 130% of the original thickness, the smooth connection between the third curved portion 127 and the fourth curved portion 128 continues to increase to the thickest point of 140% of the original thickness and then decreases to the original thickness in a leftwards direction, the smooth connection between the fourth curved portion 128 and the third curved portion continues to decrease to 90% of the original thickness, the smooth connection between the fifth curved portion 129 and the fourth curved portion 128 increases the thickness of the side wall to 100% of the original thickness and then decreases same to 90% of the original thickness in a leftwards and upwards direction, the smooth connection between the sixth curved portion 1201 and the fifth curved portion 129 decreases the thickness of the side wall to 70% of the original thickness and then increases same to 90% of the original thickness in an upwards direction, the smooth connection between the second linear portion 131 and the sixth curved portion 1201 extends upward, and the thickness of the second linear portion 131 is 90% of the original thickness.

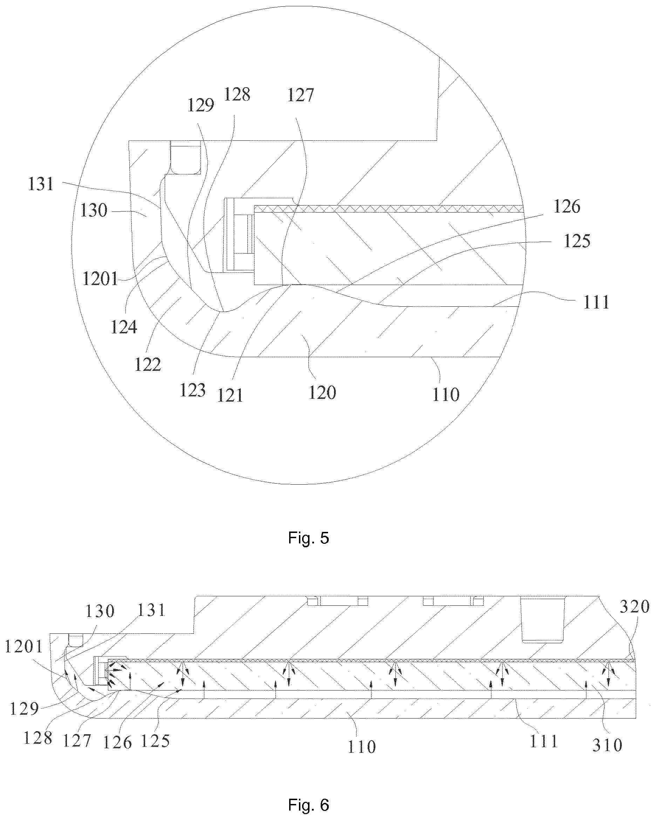

Fig. 6 is a schematic diagram of the reflection of light by the curved portions of the panel light shown in Fig. 3. The downward light is reflected back upwards to the surface of the light guide plate 310 by the first linear portion 111 in the middle region of the bottom wall 110; the downward light is reflected to the upper right back to the light guide plate 310 by the first curved portion 125 and the second curved portion 126; at the right side of the highest point (the contact point with the light guide plate 310, that is, the thickest position of the bottom wall 110), the downward light is reflected to the upper right back to the surface of the light guide plate 310 by the third curved portion 127, at the highest point, the downward light is reflected back upwards to the surface of the light guide plate 310 by the third curved portion 127, and at the left side of the highest point, the downward light is reflected to the upper left to cavity 140 by the third curved portion 127; at the right side of the lowest point (the thinnest position of the bottom wall 110), the downward light is reflected to the upper left to the cavity 140 by the sixth curved portion 1201, at the lowest point, the downward light is reflected upwards to the cavity 140 by the sixth curved portion 1201, and at the left side of the lowest point, the downward light is reflected to the upper right to the cavity 140 by the sixth curved portion 1201; the light is reflected to the upper left to the cavity 140 by the fifth curved portion 129 and the sixth curved portion 1201; and the second linear portion 131 is located at the upper left of the cavity 140, the cavity 140 gradually decreases upwards along the second linear portion 131 until the flange is in contact with the outer side surface of the light body 200, and the light directed to the surface of the second bending portion is reflected to the upper right to the cavity 140 by the second curved portion.

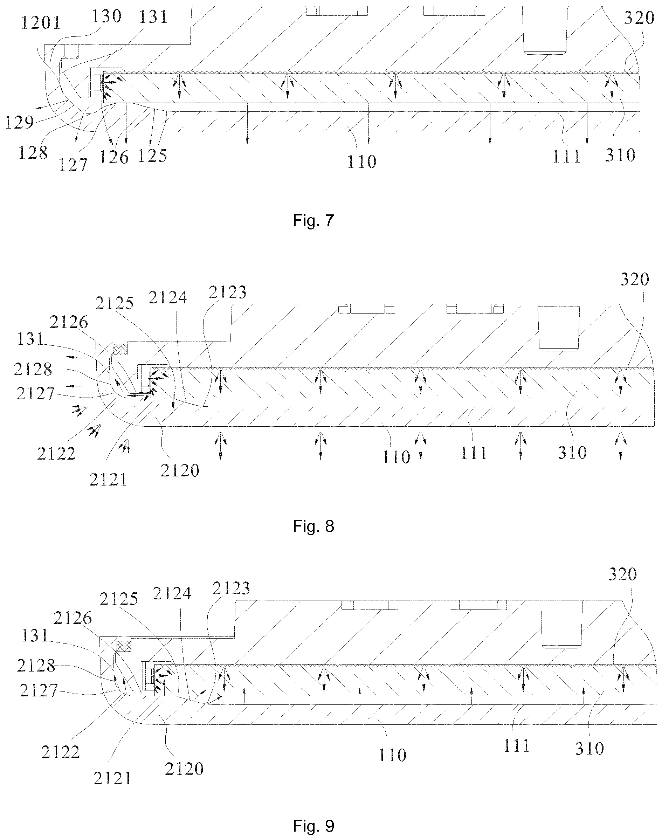

Fig. 7 is a schematic diagram of the refraction of light by the curved portions of the panel light shown in Fig. 3. The first linear portion 111 in the middle region of the bottom wall 110 enables the downward light to be sent out downwards through the light cover 100 (made of a light-transmitting opaque material). The first curved portion 125 and the second curved portion 126 refract the downward light through the light cover 100 and send out same to the lower left. At the right side of the highest point (the contact point with the light guide plate 310, that is, the thickest portion of the bottom wall 110), the downward light is refracted to the lower left and emitted by the third curved portion 127 through the light cover 100; at the highest point, the downward light is emitted downwards by the third curved portion 127 through the light cover 100; and at the left side of the highest point, the downward light is refracted to the lower right and emitted by the third curved portion 127 through the light cover 100.

At the right side of the lowest point (the thinnest position of the bottom wall 110), the light shown in the figure is refracted to the lower left and sent out by the fourth curved portion 128 through the light cover; at the lowest point, the downward light is sent out downwards by the fourth curved portion 128 through the light cover; and at the left side of the lowest point, the light shown in the figure is sent out to the lower right by the fourth curved portion 128 through the light cover 100. The fifth curved portion 129 and the sixth curved portion 1201 both sent out the light shown in the figure through the light cover 100 to the lower left.

In the second embodiment (see Fig. 8), the panel light of the second embodiment differs from the panel light of the first embodiment only in having a second optical bulge 2120 different from the optical bulge 120 of the first embodiment. The second optical bulge 2120 is produced on the bottom of the inner surface of the light cover 100 and at the edge of the assembled light guide plate 310. The second optical bulge 2120 comprises a first boss 2121 abutting against the light-emitting assembly 300 and a first recess 2122 located beside the first boss 2121 and away from the middle of the bottom wall 110, with the thickness of the light cover 100 at the lowest point of the first recess 2122 being less than the thickness of the light cover 100 in the middle of the bottom wall 110. The cross section of the second optical bulge 2120 comprises six curved portions from right to left, and smooth connections are formed between the curved portions, with the first curved portion 2123 being in smooth connection with the first linear portion 111 of the bottom wall 110. The second optical bulge 2120 comprises a first curved portion 2123 connected with the bottom wall 110, a second curved portion 2124 connected with the first curved portion 2123 and forming a wall surface of the first boss 2121, a third curved portion 2125 connected with the second curved portion 2124 and forming a corner of the first boss 2121, a fourth curved portion 2126 connected with the third curved portion 2125 and forming a top of the first boss 2121, a fifth curved portion 2127 connected with the fourth curved portion 2126 and forming the first recess 2122, and a sixth curved portion 2128 connected with the fifth curved portion 2127 and the flange 130.

The inner surface of the light cover 100 can be formed through editing by sweeping the above-mentioned curved portions along a trajectory curve, such as circle and rounded square.

Specifically, as compared with the first linear portion 111 of the bottom wall 110, the first curved portion 2123 has a greater curvature than that of the first linear portion 111, and a comparison between the curvature of each of the six curved portions and the adjacent curved portion is as follows: the curvature of the second curved portion 2124 increases, the curvature of the third curved portion 2125 increases, the curvature of the fourth curved portion 2126 decreases, the curvature of the fifth curved portion 2127 increases, the curvature of the sixth curved portion 2128 increases, and the curvature of the second linear portion 131 decreases. The centres of curvature of the first curved portion 2123, the second curved portion 2124, the fifth curved portion 2127 and the sixth curved portion 2128 are all located on the inner side surface of the light cover 100. The centre of curvature of the third curved portion 2125 is located on the outer side surface of the light cover 100. The curvature of the fourth curved portion 2126 is zero.

If the thickness of the middle region of the bottom wall of the light cover 100 is set to be 1 (that is, the original thickness is 1), the changes in the wall thickness of the curved portions are as follows: the smooth connection between the first curved portion 2123 and the first linear portion 111 gradually increases from right to left to 103% to 107% of the original thickness, the smooth connection between the second curved portion 2124 and the first curved portion 2123 continues to increase in a leftwards direction to 133% to 137% of the original thickness, the smooth connection between the third curved portion 2125 and the second curved portion 2124 continues to increase in a leftwards direction to the thickest point in the range of 138% to 142% of the original thickness, the smooth connection between the fourth curved portion 2126 and the third curved portion 2125 continues to maintain in a leftwards direction at 138% to 142% of the original thickness, since the outer surface of the light cover 100 has a curved shape of a rounded angle, the wall thickness of the fourth curved portion 2126 at the left portion decreases from 138% to 142% of the original thickness to 105% to 115% thereof, the smooth connection between the fifth curved portion 2127 and the fourth curved portion 2126 decreases the thickness of the side wall in an upwards and leftwards direction to 75% to 85% of the original thickness, the smooth connection between the sixth curved portion 2128 and the fifth curved portion 2127 further decreases the thickness of the side wall in an upwards direction to 65% to 75% of the original thickness, the second linear portion 131 maintains the thickness of the side wall at 65% to 75% of the original thickness, and the smooth connection between the second linear portion 131 and the sixth curved portion 2128 is in smooth connection with the section line at the connecting protrusion 150 to form the connecting protrusion 150, with the thickness of the connecting protrusion 150 being 85% to 95% of the original thickness.

In a preferred embodiment, the smooth connection between the first curved portion 2123 and the first linear portion 111 gradually increases from right to left to 105% of the original thickness, the smooth connection between the second curved portion 2124 and the first curved portion 2123 continues to increase in a leftwards direction to 135% of the original thickness, the smooth connection between the third curved portion 2125 and the second curved portion 2124 continues to increase in a leftwards direction to the thickest point in the range of 140% of the original thickness, the smooth connection between the fourth curved portion 2126 and the third curved portion 2125 continues to maintain in a leftwards direction at 140% of the original thickness, since the outer surface of the light cover 100 has a curved shape of a rounded angle, the wall thickness of the fourth curved portion 2126 at the left portion decreases from 140% of the original thickness to 110% thereof, the smooth connection between the fifth curved portion 2127 and the fourth curved portion 2126 decreases the thickness of the side wall in an upwards and leftwards direction to to 80% of the original thickness, the smooth connection between the sixth curved portion 2128 and the fifth curved portion 2127 further decreases the thickness of the side wall in an upwards direction to 70% of the original thickness, the second linear portion 131 maintains the thickness of the side wall at 70% of the original thickness, and the smooth connection between the second linear portion 131 and the sixth curved portion 2128 is in smooth connection with the section line at the connecting protrusion 150 to form the connecting protrusion 150, with the thickness of the connecting protrusion 150 being 90% of the original thickness.

At the flange, appropriately decreasing the thickness can ensure that, light rays that are weak in the cavity can also present a brightness at the surface equivalent to that at the bottom wall, so that according to the control of the thickness at various positions, it is ensured to allow light to be uniformly diffused through the light cover.

Fig. 9 is a schematic diagram of the reflection of light by the curved portions of the panel light shown in Fig. 8. The downward light is reflected back upwards to the surface of the light guide plate 310 by the first linear portion 111 in the middle region of the bottom wall 110. The downward light is reflected back to the upper right to the light guide plate 310 by the first curved portion 2123, the second curved portion 2124 and the third curved portion 2125. The downward light is reflected back upwards to the surface of the light guide plate 310 by the fourth curved portion 2126 at the contact position with the light guide plate 310, and the downward light is reflected to the upper left to the cavity 140 by the left side of the fourth curved portion 2126. The fifth curved portion 2127 and the sixth curved portion 2128 reflect the light emitted to the surface thereof to the upper left to the cavity 140. The second linear portion 131 is located at the upper left of the cavity 140, the cavity 140 gradually decreases upwards along the second linear portion 131 until the connecting protrusion 150 on the inner side surface of the flange 130 is in contact with the outer side surface of the light body 200, and the light directed to the surface of the second linear portion 131 is reflected to the upper right to the cavity 140 by the second linear portion.

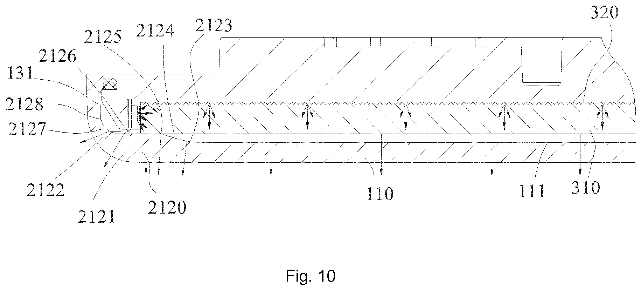

Fig. 10 is a schematic diagram of the refraction of light by the curved portions of the panel light shown in Fig. 8. The first linear portion 111 in the middle region of the bottom wall 110 enables the downward light to be sent out downwards through the light cover 100 (made of a light-transmitting opaque material). The first curved portion 2123, the second curved portion 2124 and the third curved portion 2125 refract the downward light through the light cover 100 and send out same to the lower left. The fourth curved portion 2126 at the contact position with the light guide plate 310 refracts the downward light through the light cover 100 and sends out same downwards; and when the outer surface of the light cover 100 below the fourth curved portion 2126 has a curved shape of a rounded angle, the light shown in the figure is sent out to the lower left through the light cover 100. The fifth curved portion 2127 and the sixth curved portion 2128 both refract the light shown in the figure through the light cover 100 and send out same to the lower left.

## Claims

1. A panel light, comprising a light cover (100), a light body (200) and a light-emitting assembly (300), wherein the light-emitting assembly comprises a light guide plate (310), a reflective film (320), a light strip (330) and a lamp connector (340); the light cover and the light body enclose and form a receiving cavity, the lamp connector is arranged in the receiving cavity, and the light strip is connected to the lamp connector; the reflective film abuts against the inner bottom surface of the light body, the light guide plate has a connecting side surface abutting against the reflective film and a light-emitting surface (311) facing away from the connecting side surface; a circumferential side surface of the light guide plate is provided with the light strip; the cover comprising a bottom wall (110) and a flange (130) surrounding the bottom wall, wherein the light cover further comprises an optical bulge (120) arranged on the bottom wall, the optical bulge being arranged on a side surface of the bottom wall facing a light source, and the optical bulge abutting against the light-emitting assembly of the panel light, and the light cover further has a cavity (140) for receiving the light reflected by the optical bulge, the cavity being arranged between the optical bulge and the flange and wherein the optical bulge, the flange, the bottom wall and the lamp connector enclose and form the cavity.

2. The panel light of claim 1, wherein in the light cover the optical bulge comprises a first boss (121) abutting against the light-emitting assembly, and a first recess (123) located beside the first boss and away from the middle of the bottom wall, with the thickness of the light cover at the lowest point of the first recess being less than the thickness of the light cover in the middle of the bottom wall.

3. The panel light of claim 2, wherein in the light cover the optical bulge further comprises a second boss (122), the first recess being arranged between the first boss and the second boss, and the thickness of the light cover at the second boss being less than the thickness of the light cover at the first boss.

4. The panel light of claim 3, wherein in the light cover a second recess (124) is provided on one side, facing the flange, of the second boss, with the thickness of the light cover at the lowest point of the second recess being greater than the thickness of the light cover at the lowest point of the first recess.

5. The panel light of any one of claims 1 to 4, wherein in the light cover the optical bulge comprises a first curved portion (2123) connected with the bottom wall, a third curved portion (2125) forming the first boss of the optical bulge, a second curved portion (2124) connecting the first curved portion with the third curved portion, a fourth curved portion (2126) connected with the third curved portion and forming the first recess, a fifth curved portion (2127) connected with the fourth curved portion and forming the second boss, and a sixth curved portion (2128) connected with the fifth curved portion and forming the second recess, the sixth curved portion being connected with an inner wall surface of the flange.

6. The panel light of any one of claims 1 to 5, wherein in the light cover the curvature of the second curved portion is less than that of the first curved portion, the curvature of the third curved portion is greater than that of the second curved portion, the curvature of the fourth curved portion is greater than that of the third curved portion, the curvature of the fifth curved portion is less than that of the fourth curved portion, and the curvature of the sixth curved portion is greater than that of the fifth curved portion.

7. The panel light of either claim 5 or 6, wherein in the light cover the centres of curvature of the first curved portion, the second curved portion, the fourth curved portion, the fifth curved portion and the sixth curved portion are all located on the inner side of the light cover, and the centre of curvature of the third curved portion is located on the outer side the light cover.

8. The panel light of claim 2, wherein in the light cover the top of the first boss is planar.

9. The panel light of either claim 2 or 8, wherein in the light cover the optical bulge comprises a first curved portion (125) connected with the bottom wall, a second curved portion (126) connected with the first curved portion and forming a wall surface of the first boss, a third curved portion (127) connected with the second curved portion and form ing a corner of the first boss, a fourth curved portion (128) connected with the third curved portion and forming the top of the first boss, a fifth curved portion (129) connected with the fourth curved portion and forming the first recess, and a sixth curved portion (1201) connected with the fifth curved portion and the flange.

10. The panel light of claim 9, wherein in the light cover the thickness of a middle region of the bottom wall of the light cover is the original thickness, the maximum thickness of the first curved portion is 103% to 107% of the original thickness, the maximum thickness of the second curved portion is 133% to 137% of the original thickness, the maximum thickness of the third curved portion is the thickest point of 138% to 142% of the original thickness, the minimum thickness of the fourth curved portion is 105% to 115% of the original thickness, the minimum thickness of the fifth curved portion is 75% to 85% of the original thickness, and the maximum thickness of the sixth curved portion is 85% to 95% of the original thickness.

11. The panel light of any one of claims 1-6, 8 or 10, wherein in the light cover the thickness of the flange is less than the thickness of the light cover in the middle of the bottom wall.

12. The panel light of any one of claims 1 to 11, wherein the lamp connector comprises a first connecting portion (341) for fixing the light body to an external mounting structure, and a second connecting portion (342) located inside the receiving cavity and used for connecting a mounting surface of the light guide plate.

13. The panel light of any one of claims 1 to 12, wherein the lamp connector comprises a first connecting portion (341) and a second connecting portion (342) that are separately disposed, and the second connecting portion is provided with a passage for receiving an electric wire.

## Patentansprüche

1. Flächenleuchte, umfassend eine Lichtscheibe (100), einen Lichtkörper (200) und eine lichtemittierende Anordnung (300), wobei die lichtemittierende Anordnung eine Lichtleiterplatte (310), einen reflektierenden Film (320), einen Lichtstreifen (330) und einen Lampenstecker (340) umfasst; die Lichtscheibe und der Lichtkörper einen Aufnahmehohlraum umschließen und bilden, der Lampenstecker in dem Aufnahmehohlraum angeordnet ist und der Lichtstreifen mit dem Lampenstecker verbunden ist; der reflektierende Film an der inneren Bodenfläche des Lichtkörpers anliegt, die Lichtleiterplatte eine verbindende Seitenfläche, die an dem reflektierenden Film anliegt, und eine lichtemittierende Fläche (311) aufweist, die von der verbindenden Seitenfläche abgewandt ist; eine umlaufende Seitenfläche der Lichtleiterplatte, die mit dem Lichtstreifen versehen ist; wobei die Abdeckung eine Bodenwand (110) und einen die Bodenwand umgebenden Flansch (130) umfasst, wobei die Lichtscheibe ferner eine optische Wölbung (120) umfasst, die auf der Bodenwand angeordnet ist, wobei die optische Wölbung auf einer Seitenfläche der Bodenwand angeordnet ist, die einer Lichtquelle zugewandt ist, und wobei die optische Wölbung an der lichtemittierenden Anordnung der Flächenleuchte anliegt, und die Lichtscheibe ferner einen Hohlraum (140) zum Aufnehmen des von der optischen Wölbung reflektierten Lichts aufweist, wobei der Hohlraum zwischen der optischen Wölbung und dem Flansch angeordnet ist und wobei die optische Wölbung, der Flansch, die Bodenwand und der Lampenstecker den Hohlraum umschließen und bilden.

2. Flächenleuchte nach Anspruch 1, wobei in der Lichtscheibe die optische Wölbung einen ersten Ansatz (121) umfasst, der gegen die lichtemittierende Anordnung anliegt, und eine erste Aussparung (123) umfasst, die neben dem ersten Ansatz und von der Mitte der Bodenwand entfernt angeordnet ist, wobei die Dicke der Lichtscheibe am tiefsten Punkt der ersten Aussparung geringer ist als die Dicke der Lichtscheibe in der Mitte der Bodenwand.

3. Flächenleuchte nach Anspruch 2, wobei in der Lichtscheibe die optische Wölbung ferner einen zweiten Ansatz (122) umfasst, wobei die erste Aussparung zwischen dem ersten Ansatz und dem zweiten Ansatz angeordnet ist und die Dicke der Lichtscheibe am zweiten Ansatz geringer ist als die Dicke der Lichtscheibe am ersten Ansatz.

4. Flächenleuchte nach Anspruch 3, wobei in der Lichtscheibe auf einer dem Flansch zugewandten Seite des zweiten Ansatzes eine zweite Aussparung (124) vorgesehen ist, wobei die Dicke der Lichtscheibe am tiefsten Punkt der zweiten Aussparung größer ist als die Dicke der Lichtscheibe am tiefsten Punkt der ersten Aussparung.

5. Flächenleuchte nach einem der Ansprüche 1 bis 4, wobei in der Lichtscheibe die optische Wölbung einen ersten gekrümmten Abschnitt (2123) umfasst, der mit der Bodenwand verbunden ist, einen dritten gekrümmten Abschnitt (2125), der den ersten Ansatz der optischen Wölbung bildet, und einen zweiten gekrümmten Abschnitt (2124), der den ersten gekrümmten Abschnitt mit dem dritten gekrümmten Abschnitt verbindet, einen vierten gekrümmten Abschnitt (2126), der mit dem dritten gekrümmten Abschnitt verbunden ist und die erste Aussparung bildet, einen fünften gekrümmten Abschnitt (2127), der mit dem vierten gekrümmten Abschnitt verbunden ist und den zweiten Ansatz bildet, und einen sechsten gekrümmten Abschnitt (2128), der mit dem fünften gekrümmten Abschnitt verbunden ist und die zweite Aussparung bildet, wobei der sechste gekrümmte Abschnitt mit einer Innenwandfläche des Flansches verbunden ist.

6. Flächenleuchte nach einem der Ansprüche 1 bis 5, wobei in der Lichtscheibe die Krümmung des zweiten gekrümmten Abschnitts geringer als die des ersten gekrümmten Abschnitts ist, die Krümmung des dritten gekrümmten Abschnitts größer als die des zweiten gekrümmten Abschnitts ist, die Krümmung des vierten gekrümmten Abschnitts größer als die des dritten gekrümmten Abschnitts ist, die Krümmung des fünften gekrümmten Abschnitts geringer als die des vierten gekrümmten Abschnitts ist und die Krümmung des sechsten gekrümmten Abschnitts größer als die des fünften gekrümmten Abschnitts ist.

7. Flächenleuchte nach Anspruch 5 oder 6, wobei in der Lichtscheibe die Krümmungsmittelpunkte des ersten gekrümmten Abschnitts, des zweiten gekrümmten Abschnitts, des vierten gekrümmten Abschnitts, des fünften gekrümmten Abschnitts und des sechsten gekrümmten Abschnitts alle auf der Innenseite der Lichtscheibe liegen und der Krümmungsmittelpunkt des dritten gekrümmten Abschnitts auf der Außenseite der Lichtscheibe liegt.

8. Flächenleuchte nach Anspruch 2, wobei in der Lichtscheibe die Oberseite des ersten Ansatzes planar ist.

9. Flächenleuchte nach Anspruch 2 oder 8, wobei in der Lichtscheibe die optische Wölbung einen ersten gekrümmten Abschnitt (125) umfasst, der mit der Bodenwand verbunden ist, einen zweiten gekrümmten Abschnitt (126) umfasst, der mit dem ersten gekrümmten Abschnitt verbunden ist und eine Wandfläche des ersten Ansatzes bildet, und einen dritten gekrümmten Abschnitt (127) umfasst, der mit dem zweiten gekrümmten Abschnitt verbunden ist und eine Ecke des ersten Ansatzes bildet, einen vierten gekrümmten Abschnitt (128) umfasst, der mit dem dritten gekrümmten Abschnitt verbunden ist und die Oberseite des ersten Ansatzes bildet, einen fünften gekrümmten Abschnitt (129) umfasst, der mit dem vierten gekrümmten Abschnitt verbunden ist und die erste Aussparung bildet, und einen sechsten gekrümmten Abschnitt (1201) umfasst, der mit dem fünften gekrümmten Abschnitt und dem Flansch verbunden ist.

10. Flächenleuchte nach Anspruch 9, wobei in der Lichtscheibe die Dicke eines mittleren Bereichs der Bodenwand der Lichtscheibe die ursprüngliche Dicke ist, die maximale Dicke des ersten gekrümmten Abschnitts 103 % bis 107 % der ursprünglichen Dicke beträgt, die maximale Dicke des zweiten gekrümmten Abschnitts 133 % bis 137 % der ursprünglichen Dicke beträgt, die maximale Dicke des dritten gekrümmten Abschnitts die dickste Stelle von 138 % bis 142 % der ursprünglichen Dicke beträgt, die minimale Dicke des vierten gekrümmten Abschnitts 105 % bis 115 % der ursprünglichen Dicke beträgt, die minimale Dicke des fünften gekrümmten Abschnitts 75 % bis 85 % der ursprünglichen Dicke beträgt, und die maximale Dicke des sechsten gekrümmten Abschnitts 85 % bis 95 % der ursprünglichen Dicke beträgt.

11. Flächenleuchte nach einem der Ansprüche 1-6, 8 oder 10, wobei in der Lichtscheibe die Dicke des Flansches geringer ist als die Dicke der Lichtscheibe in der Mitte der Bodenwand.

12. Flächenleuchte nach einem der Ansprüche 1 bis 11, wobei der Lampenstecker einen ersten Verbindungsabschnitt (341) zum Befestigen des Lichtkörpers an einer äußeren Montagestruktur und einen zweiten Verbindungsabschnitt (342) umfasst, der sich innerhalb des Aufnahmehohlraums befindet und zum Verbinden einer Montagefläche der Lichtleiterplatte verwendet wird.

13. Flächenleuchte nach einem der Ansprüche 1 bis 12, wobei der Lampenstecker einen ersten Verbindungsabschnitt (341) und einen zweiten Verbindungsabschnitt (342) umfasst, die getrennt angeordnet sind, und der zweite Verbindungsabschnitt mit einem Durchgang zum Aufnehmen eines elektrischen Drahtes versehen ist.

## Revendications

1. Panneau lumineux, comprenant un couvercle lumineux (100), un corps lumineux (200) et un ensemble émetteur de lumière (300), dans lequel l'ensemble émetteur de lumière comprend une plaque de guidage de lumière (310), un film réfléchissant (320), une bande lumineuse (330) et un connecteur de lampe (340); le couvercle lumineux et le corps lumineux renferment et forment une cavité de réception, le connecteur de lampe est agencé dans la cavité de réception, et la bande lumineuse est connectée au connecteur de lampe; le film réfléchissant bute contre la surface inférieure intérieure du corps lumineux, la plaque de guidage de lumière a une surface latérale de connexion venant en butée contre le film réfléchissant et une surface émettrice de lumière (311) opposée à la surface latérale de connexion; une surface latérale circonférentielle de la plaque de guidage de lumière est pourvue de la bande lumineuse; le couvercle comprenant une paroi inférieure (110) et une bride (130) entourant la paroi inférieure, dans lequel le couvercle lumineux comprend en outre un renflement optique (120) agencé sur la paroi inférieure, le renflement optique étant agencé sur une surface latérale de la paroi inférieure faisant face à une source de lumière, et le renflement optique butant contre l'ensemble émetteur de lumière du panneau lumineux, et le couvercle lumineux comporte en outre une cavité (140) pour recevoir la lumière réfléchie par le renflement optique, la cavité étant agencée entre le renflement optique et la bride et dans lequel le renflement optique, la bride, la paroi de fond et le connecteur de la lampe renferment et forment la cavité.

2. Panneau lumineux selon la revendication 1, dans lequel dans le couvercle lumineux le renflement optique comprend un premier bossage (121) en butée contre l'ensemble émetteur de lumière, et un premier évidement (123) situé à côté du premier bossage et à l'écart du milieu de la paroi inférieure, l'épaisseur du couvercle lumineux au point le plus bas du premier évidement étant inférieure à l'épaisseur du couvercle lumineux au milieu de la paroi inférieure.

3. Panneau lumineux selon la revendication 2, dans lequel dans le couvercle lumineux le renflement optique comprend en outre un deuxième bossage (122), le premier évidement étant agencé entre le premier bossage et le deuxième bossage, et l'épaisseur du couvercle lumineux au niveau du deuxième bossage étant inférieure à l'épaisseur du couvercle lumineux au niveau du premier bossage

4. Panneau lumineux selon la revendication 3, dans lequel dans le couvercle lumineux un deuxième évidement (124) est ménagé sur un côté, tourné vers la bride, du deuxième bossage, avec l'épaisseur du couvercle lumineux au point le plus bas du deuxième évidement étant supérieure à l'épaisseur du couvercle lumineux au point le plus bas du premier évidement.

5. Panneau lumineux selon une quelconque des revendications 1 à 4, dans lequel dans le couvercle lumineux le renflement optique comprend une première partie incurvée (2123) reliée à la paroi inférieure, une troisième partie incurvée (2125) formant le premier bossage du renflement optique, une deuxième partie incurvée (2124) reliant la première partie incurvée à la troisième partie incurvée, une quatrième partie incurvée (2126) reliée à la troisième partie incurvée et formant le premier évidement, une cinquième partie incurvée (2127) reliée à la quatrième partie incurvée et formant le deuxième bossage, et une sixième partie incurvée (2128) reliée à la cinquième partie incurvée et formant le deuxième évidement, la sixième partie incurvée étant reliée à une surface de la paroi intérieure de la bride.

6. Panneau lumineux selon une quelconque des revendications 1 à 5, dans lequel dans le couvercle lumineux la courbure de la deuxième partie incurvée est inférieure à celle de la première partie incurvée, la courbure de la troisième partie incurvée est supérieure à celle de la deuxième partie incurvée, la courbure de la quatrième partie incurvée est supérieure à celle de la troisième partie incurvée, la courbure de la cinquième partie incurvée est inférieure à celle de la quatrième partie incurvée, et la courbure de la sixième partie incurvée est supérieure à celle de la cinquième partie incurvée.

7. Panneau lumineux selon la revendication 5 ou 6, dans lequel le couvercle lumineux recouvre les centres de courbure de la première partie incurvée, la deuxième partie incurvée, la quatrième partie incurvée, la cinquième partie incurvée et la sixième partie incurvée sont toutes situées sur le côté intérieur du couvercle lumineux, et le centre de courbure de la troisième partie incurvée est situé sur le côté extérieur du couvercle lumineux.

8. Panneau lumineux selon la revendication 2, dans lequel, dans le couvercle lumineux, le dessus du premier bossage est planaire.

9. Panneau lumineux selon la revendication 2 ou 8, dans lequel, dans le couvercle lumineux, le renflement optique comprend une première partie incurvée (125) reliée à la paroi inférieure, une deuxième partie incurvée (126) reliée à la première partie incurvée et formant une surface de paroi du premier bossage, une troisième partie incurvée (127) reliée à la deuxième partie incurvée et formant un coin du premier bossage, une quatrième partie incurvée (128) reliée à la troisième partie incurvée et formant le sommet du premier bossage, une cinquième partie incurvée (129) reliée à la quatrième partie incurvée et formant le premier évidement, et une sixième partie incurvée (1201) reliée à la cinquième partie incurvée et à la bride.

10. Panneau lumineux selon la revendication 9, dans lequel dans le couvercle lumineux l'épaisseur d'une région médiane de la paroi inférieure du couvercle lumineux est l'épaisseur d'origine, l'épaisseur maximale de la première partie incurvée est de 103% à 107% de l'épaisseur d'origine, l'épaisseur maximale de la deuxième partie incurvée est de 133% à 137% de l'épaisseur d'origine, l'épaisseur maximale de la troisième partie incurvée est le point le plus épais de 138% à 142% de l'épaisseur d'origine, l'épaisseur minimale de la quatrième partie incurvée est de 105% à 115% de l'épaisseur d'origine, l'épaisseur minimale de la cinquième partie incurvée est de 75% à 85% de l'épaisseur d'origine et l'épaisseur maximale de la sixième partie incurvée est de 85% à 95% de l'épaisseur d'origine.

11. Panneau lumineux selon une quelconque des revendications 1 à 6, 8 ou 10, dans lequel, dans le couvercle lumineux, l'épaisseur de la bride est inférieure à l'épaisseur du couvercle lumineux au milieu de la paroi inférieure.

12. Panneau lumineux selon une quelconque des revendications 1 à 11, dans lequel le connecteur de lampe comprend une première partie de connexion (341) pour fixer le corps lumineux à une structure de montage externe, et une deuxième partie de connexion (342) située à l'intérieur de la cavité de réception et utilisée pour connecter une surface de montage de la plaque de guidage de lumière.

13. Panneau lumineux selon une quelconque des revendications 1 à 12, dans lequel le connecteur de lampe comprend une première partie de connexion (341) et une deuxième partie de connexion (342) qui sont disposées séparément, et la deuxième partie de connexion est pourvue d'un passage pour recevoir un fil électrique.
